# EUROPÄISCHE PATENTSCHRIFT

(11) **EP 3 873 034 B1**
(45) Veröffentlichungstag und Bekanntmachung des Hinweises auf die Patenterteilung: **28.08.2024**
(21) Anmeldenummer: 20160112.7
(22) Anmeldetag: 28.02.2020
(51) Int. Cl.: H04L 9/40, H04L 43/12, H04L 41/28

(54) **VERFAHREN UND SYSTEM ZUR ERFASSUNG VON DATENVERKEHR IN EINEM KOMMUNIKATIONSNETZ**
METHOD AND SYSTEM FOR DETECTING DATA TRAFFIC IN A COMMUNICATION NETWORK
PROCÉDÉ ET SYSTÈME DE DÉTECTION D'UN TRAFIC DE DONNÉES DANS UN RÉSEAU DE COMMUNICATION

(43) Veröffentlichungstag der Anmeldung: 01.09.2021
(73) Patentinhaber: Siemens Aktiengesellschaft, 80333 München (DE)
(72) Erfinder: Albrecht, Harald, 90475 Nürnberg (DE); Kern, Stefan, 76199 Karlsruhe (DE); Walpurgis, Lars, 90475 Nürnberg (DE)
(74) Vertreter: Siemens Patent Attorneys

(56) Entgegenhaltungen:
- WO-A1-2017/203105
- JP-A- 2016 174 420

## Beschreibung

Die vorliegende Erfindung betrifft ein Verfahren zur Erfassung von Datenverkehr in einem Kommunikationsnetz, insbesondere in einem Kommunikationsnetz eines industriellen Automatisierungssystems, und ein System zur Erfassung von Datenverkehr in einem Kommunikationsnetz.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems zu verteilt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden. Insbesondere aus diesem Grund sind geeignete Mittel zur Überwachung von Datenverkehr von großer Bedeutung.

Aus der älteren europäischen Patentanmeldung mit dem Anmeldeaktenzeichen 19204976.5 ist ein Verfahren zur Diagnose des Datenverkehrs in einem Cluster mit mehreren Arbeitsknoten bekannt, bei dem durch die Arbeitsknoten Container bzw. Pods bereitgestellt werden. Mittels eines Cluster-Erfassungsmoduls werden Informationen erfasst, welchen Arbeitsknoten ein Knoten-Erfassungsmodul zugeordnet ist. Empfängt das Cluster-Erfassungsmodul eine Anfrage zum Erfassen von Datenpaketen, kontaktiert das Cluster-Erfassungsmodul die Knoten-Erfassungsmodule der betroffenen Knoten, und die Knoten-Erfassungsmodule erfassen Datenpakete. Außerdem leiten die Knoten-Erfassungsmodule die erfassten Datenpakete bzw. deren Duplikate an das Cluster-Erfassungsmodul weiter. Das Cluster-Erfassungsmodul leitet die erfassten Datenpakete bzw. Duplikate wiederum an eine jeweils anfragende Einheit weiter.

Die ältere internationale Patentanmeldung mit dem Anmeldeaktenzeichen PCT/EP2019/082894 betrifft ein Verfahren zur Erfassung von Datenpakten, die von einem ersten Container innerhalb eines Clusters von Containern stammen. Dabei sind jedem Container mehrere Netzwerk-Schnittstellen zur Übermittlung von Datenpaketen zugeordnet. Sobald eine erste Verbindung zur Übermittlung von Datenpaketen über eine erste Netzwerk-Schnittstelle, die dem ersten Container zugeordnet ist, detektiert wird, wird eine dem ersten Container zugeordnete Kennung in einen der ersten Verbindung zugeordneten Datenstrom eingefügt. Anhand der eingefügten Kennung kann der erste Container zur Erfassung von Datenpakten, die von ihm stammen, identifiziert werden.

In der älteren europäischen Patentanmeldung mit dem Anmeldeaktenzeichen 19219277.1 ist ein Verfahren Überwachung von Datenverkehr in einem Kommunikationsnetz beschrieben, über das Steuerungsanwendungen mittels Ablaufsteuerungskomponenten bereitgestellt werden. Für eine Nutzung der Steuerungsanwendungen werden erste Zugriffsrechte überprüft. Eine Zugriffssteuerungseinrichtung gibt durch die Ablaufsteuerungskomponenten genutzte Kommunikationsnetz-Schnittstellen zum Zugriff frei und überprüft hierfür zweite Zugriffsrechte zur Nutzung der Kommunikationsnetz-Schnittstellen. Bei einer Anfrage eines Benutzers zur Überwachung von Datenverkehr, der von einer ausgewählten Steuerungsanwendung ausgeht bzw. dort terminiert, fragt die Zugriffssteuerungseinrichtung von einer Überwachungseinrichtung erste Zugriffsrechte des Benutzers zur Nutzung der ausgewählten Steuerungsanwendung ab. In Abhängigkeit der von der Überwachungseinrichtung abgefragten ersten Zugriffsrechte räumt die Zugriffssteuerungseinrichtung für die angefragte Überwachung des Datenverkehrs zweite Zugriffsrechte zur Nutzung der Kommunikationsnetz-Schnittstellen ein, die der ausgewählten Steuerungsanwendung zugeordnet sind.

Aus JP 2016 174420 A ist ein Verfahren zum Überwachen von Datenverkehr in einer Vielzahl von Kommunikationsnetzen bekannt, bei dem Verkehrsdaten von überwachten Geräten empfangen und Verkehrsakkumulationsdaten gespeichert werden. Die Verkehrsdaten werden durch eine Analyseeinheit für jedes überwachte Kommunikationsnetz aus den Verkehrsakkumulationsdaten extrahiert. Die Analyseeinheit erzeugt aus den extrahierten Verkehrsdaten Verkehrsanalysedaten, die mit einer Kennung des jeweiligen überwachten Kommunikationsnetzes verknüpft gespeichert werden. Die Verkehrsanalysedaten werden auf Benutzeranforderung unter Angabe der Kennung des jeweiligen Kommunikationsnetzes bereitgestellt.

WO 2017/203105 A1 betrifft ein Verfahren zum Protokollieren von Kommunikationspaketen aus einem Kommunikationssignal in einem Kommunikationsnetz. Das Kommunikationsnetzwerk umfasst einen oder mehrere Perimeter. Aus dem Kommunikationssignal wird ein geteiltes Signal gebildet, wobei das geteilte Signal hinsichtlich seines Informationsgehalts identisch mit dem Kommunikationssignal ist. Die Kommunikationspakete des geteilten Signals werden unter Verwendung eines Netzwerkschnittstellencontrollers in einem Zwischenspeicher erfasst.

Funktionen zur Erfassung bzw. Überwachung von Datenverkehr in einem Kommunikationsnetz können mittels Edge-Computing-Lösung grundsätzlich auch innerhalb eines industriellen Automatisierungssystems oder eines privaten Kommunikationssystems und somit anwendernah bereitgestellt werden. Ist beispielsweise aufgrund nur gelegentlicher Nutzung solcher Funktionen anwenderseitig nicht gewünscht, eigene Hardware und Software für derartige Zwecke bereitzustellen und zu warten, bietet sich eine Nutzung von Cloud-Computing-Lösungen an. Darüber hinaus ist es in vielen Fällen nicht wirtschaftlich, Netzüberwachungsfunktionen mittels Edge-Computing-Lösung in bestehende Netzinfrastrukturgeräte, wie Switches oder Router, zu integrieren. Oft weisen entsprechende Analysefunktionen im Vergleich zum Leistungsvermögen der Netzinfrastrukturgeräte nämlich einen hohen Ressourcenbedarf auf.

Der vorliegenden Erfindung liegt daher die Aufgabe zugrunde, ein aufwandsarm in bestehende Kommunikationssysteme zu integrierendes Verfahren zur zuverlässigen Erfassung von Datenverkehr in einem Kommunikationsnetz zu schaffen sowie eine geeignete Anordnung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 12 angegebenen Merkmalen gelöst. Vorteilhafte Weiterbildungen sind in den abhängigen Ansprüchen angegeben.

Das erfindungsgemäße Verfahren ist zur Erfassung von Datenverkehr in einem Kommunikationsnetz vorgesehen, das zumindest ein erstes und ein zweites Kommunikationsendgerät sowie zumindest ein Netzinfrastrukturgerät umfasst, an das die beiden Kommunikationsgeräte angeschlossen sind. Die beiden Kommunikationsendgeräte können insbesondere industrielle Automatisierungsgeräte, wie speicherprogrammierbare Steuerungen, dezentrale Peripheriegeräte oder Eingabe-/Ausgabe-Einheiten, mit Kommunikationsmodul sein, während das Netzinfrastrukturgerät beispielsweise ein Switch oder Router ist. Durch das Netzinfrastrukturgerät wird eine gegen unautorisierten Zugriff gesicherte, den beiden Kommunikationsendgeräten zugeordnete Überwachungsschnittstelle zur Erfassung von Datenverkehr zwischen zumindest dem ersten und zweiten Kommunikationsgerät bereitgestellt.

Erfindungsgemäß werden durch eine Geräteerfassungseinrichtung Schnittstelleninformationen, die verfügbare Überwachungsschnittstellen an Netzinfrastrukturgeräten sowie Adressinformationen umfassen, die den Überwachungsschnittstellen zugeordnet sind, ermittelt und diese Schnittstelleninformationen an zumindest eine von dem zumindest einen Netzinfrastrukturgerät separierte Aufzeichnungseinrichtung bereitgestellt. Die Adressinformationen umfassen beispielsweise IP-Adressen bzw. Dienstzugangsinformationen, insbesondere Angaben über einen Port, der einem Aufzeichnungsdienst zugeordnet ist. Vorzugsweise werden durch die Aufzeichnungseinrichtung Aufzeichnungsfunktionen an der den beiden Kommunikationsendgeräten zugeordneten Überwachungsschnittstelle konfiguriert.

Bei einer Anfrage eines Benutzers zur Erfassung des Datenverkehrs zwischen dem ersten und zweiten Kommunikationsendgerät greift die Aufzeichnungseinrichtung erfindungsgemäß anhand der durch die Geräteerfassungseinrichtung bereitgestellten Schnittstelleninformationen auf die den beiden Kommunikationsendgeräten zugeordnete Überwachungsschnittstelle zugreift und speichert dort erfassten Datenverkehr zumindest temporär. Benutzer können beispielsweise Personen, physikalische bzw. logische Steuerungsgeräte sein. Mit vorliegender Erfindung können bestehende Netzinfrastrukturgeräte je nach kommunikationstechnischen oder organisatorischen Randbedingungen um Funktionen zur Erfassung bzw. Analyse von Datenverkehr erweitert werden, ohne dass hierzu grundlegende Änderungen an den Netzinfrastrukturgeräten erforderlich sind.

Vorzugsweise werden durch eine Zugriffsteuerungseinrichtung Adressinformationen und Zugriffsrechte zur Nutzung von Überwachungsschnittstellen an Netzinfrastrukturgeräten verwaltet.

In diesem Fall fragt die Aufzeichnungseinrichtung bei der Anfrage des Benutzers zur Erfassung des Datenverkehrs zwischen dem ersten und zweiten Kommunikationsendgerät von der Zugriffsteuerungseinrichtung Zugriffsrechte des Benutzers zur Nutzung der den beiden Kommunikationsendgeräten zugeordneten Überwachungsschnittstelle ab. Dementsprechend greift die Aufzeichnungseinrichtung anhand der durch die Geräteerfassungseinrichtung bereitgestellten Schnittstelleninformationen sowie anhand der von der Zugriffsteuerungseinrichtung abfragten Zugriffsrechte auf die den beiden Kommunikationsendgeräten zugeordnete Überwachungsschnittstelle zu. Zur Einräumung der Zugriffsrechte werden beispielsweise Passwörter, digitale Zertifikate bzw. digitale Schlüssel bereitgestellt. Neben den Zugriffsrechten kann die Zugriffsteuerungseinrichtung auch IP-Adressen von Netzinfrastrukturgeräten verwalten. Darüber hinaus kann die Zugriffsteuerungseinrichtung aus Redundanz-oder Lastverteilungsgründen mehrfach ausgeführt sein.

Entsprechend einer bevorzugten Ausgestaltung der vorliegenden Erfindung erfolgt die Erfassung des Datenverkehrs zwischen dem ersten und zweiten Kommunikationsendgerät zur Analyse des Datenverkehrs durch die die Aufzeichnungseinrichtung oder durch eine von der zumindest einen Aufzeichnungseinrichtung separierte Auswertungseinrichtung. Erfolgt die Analyse des erfassten Datenverkehrs zwischen dem ersten und zweiten Kommunikationsendgerät durch die Auswertungseinrichtung, stellt die Aufzeichnungseinrichtung den erfassten Datenverkehr an die Auswertungseinrichtung bereit. Insbesondere kann die Aufzeichnungseinrichtung dabei Detailinformationen, wie Aufzeichnungsfunktionen bei Netzinfrastrukturgeräten konkret aufzurufen sind, gegenüber der Auswertungseinrichtung kapseln bzw. verbergen.

Darüber hinaus wird der erfasste Datenverkehr entsprechend einer weitergehenden Ausgestaltung über eine verschlüsselte Verbindung zwischen der Aufzeichnungseinrichtung und der Auswertungseinrichtung bereitgestellt. Demgegenüber wird die Aufzeichnungseinrichtung vorzugsweise über eine Sicherungsschicht-Übertragungsstrecke, insbesondere eine direkte Sicherungsschicht-Übertragungsstrecke, mit dem Netzinfrastrukturgerät verbunden, das die den beiden Kommunikationsendgeräten zugeordnete Überwachungsschnittstelle bereitstellt. Außerdem werden Funktionen zur Analyse von Datenverkehr vorteilhafterweise als Überwachungsdienst durch die Auswertungseinrichtung bereitgestellt. In diesem Fall werden Anfragen von Benutzern zur Analyse von Datenverkehr an die Auswertungseinrichtung als Dienstzugangspunkt gerichtet.

Das erfindungsgemäße System ist zur Erfassung von Datenverkehr in einem Kommunikationsnetz vorgesehen, das zumindest ein Netzinfrastrukturgerät umfasst, an das zumindest ein erstes und ein zweites Kommunikationsendgerät angeschlossen sind. Insbesondere ist das erfindungsgemäße System zur Durchführung eines Verfahrens entsprechend vorangehenden Ausführungen geeignet. Das System umfasst eine gegen unautorisierten Zugriff gesicherte, den beiden Kommunikationsendgeräten zugeordnete Überwachungsschnittstelle zur Erfassung von Datenverkehr zwischen zumindest dem ersten und zweiten Kommunikationsgerät, eine Geräteerfassungseinrichtung und zumindest eine von dem zumindest einen Netzinfrastrukturgerät separierte Aufzeichnungseinrichtung.

Dabei ist die Geräteerfassungseinrichtung erfindungsgemäß dazu ausgestaltet und eingerichtet, Schnittstelleninformationen, die verfügbare Überwachungsschnittstellen an Netzinfrastrukturgeräten sowie Adressinformationen umfassen, die den Überwachungsschnittstellen zugeordnet sind, zu ermitteln und diese Schnittstelleninformationen an die Aufzeichnungseinrichtung bereitzustellen. Die Aufzeichnungseinrichtung ist dazu ausgestaltet und eingerichtet, bei einer Anfrage eines Benutzers zur Erfassung des Datenverkehrs zwischen dem ersten und zweiten Kommunikationsendgerät anhand der durch die Geräteerfassungseinrichtung bereitgestellten Schnittstelleninformationen auf die den beiden Kommunikationsendgeräten zugeordnete Überwachungsschnittstelle zuzugreifen und dort erfassten Datenverkehr zumindest temporär zu speichern.

Vorzugsweise umfasst das System zur Erfassung von Datenverkehr eine Zugriffsteuerungseinrichtung, die dazu ausgestaltet und eingerichtet ist, Adressinformationen und Zugriffsrechte zur Nutzung von Überwachungsschnittstellen an Netzinfrastrukturgeräten zu verwalten. In diesem Fall ist die Aufzeichnungseinrichtung dazu ausgestaltet und eingerichtet, bei der Anfrage des Benutzers zur Erfassung des Datenverkehrs zwischen dem ersten und zweiten Kommunikationsendgerät von der Zugriffsteuerungseinrichtung Zugriffsrechte des Benutzers zur Nutzung der den beiden Kommunikationsendgeräten zugeordneten Überwachungsschnittstelle abzufragen. Dementsprechend ist die Aufzeichnungseinrichtung vorteilhafterweise dazu ausgestaltet und eingerichtet, anhand der durch die Geräteerfassungseinrichtung bereitgestellten Schnittstelleninformationen sowie anhand der von der Zugriffsteuerungseinrichtung abfragten Zugriffsrechte auf die den beiden Kommunikationsendgeräten zugeordnete Überwachungsschnittstelle zuzugreifen.

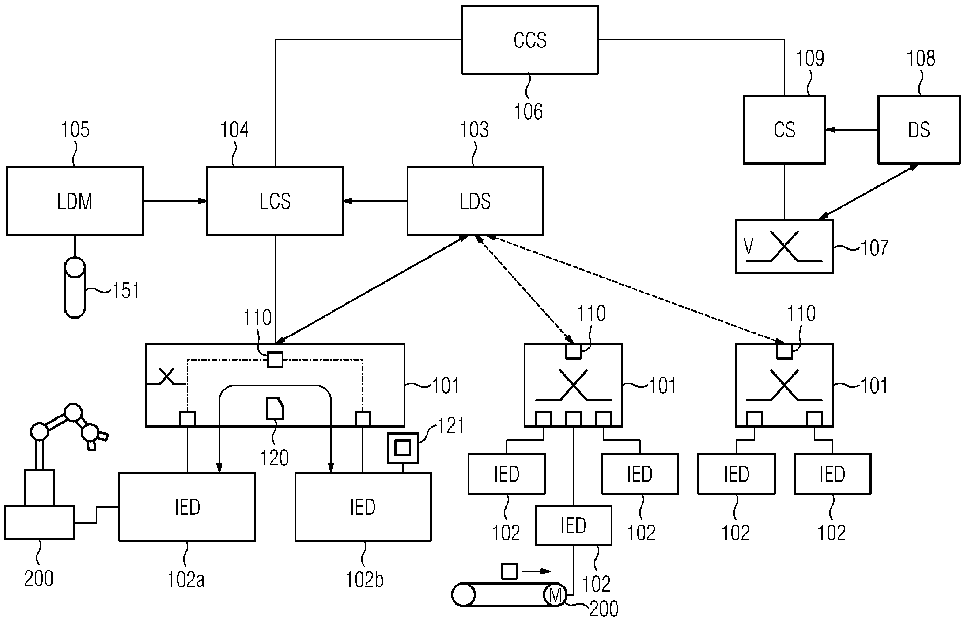

Die vorliegende Erfindung wird nachfolgend an einem Ausführungsbeispiel anhand der Zeichnung näher erläutert. Es zeigt die
- Figur: eine schematische Darstellung einer Anordnung mit mehreren Netzinfrastrukturgeräten und Kommunikationsendgeräten sowie einem System zur Erfassung von Datenverkehr in einem Kommunikationsnetz.

Die in der Figur dargestellte Anordnung umfasst mehrere Netzinfrastrukturgeräte 101 und mehrere jeweils an ein Netzinfrastrukturgerät 101 angeschlossene Kommunikationsendgeräte 102, 102a-b. Die Netzinfrastrukturgeräte 101 sind im vorliegenden Ausführungsbeispiel Switches. Grundsätzlich können auch Router Netzinfrastrukturgeräte 101 darstellen. Zu Kommunikationsendgeräten 102 zählen insbesondere speicherprogrammierbare Steuerungen, dezentrale Peripheriegeräte, Eingabe-/Ausgabe-Einheiten und Bedien- und Beobachtungsstationen eines industriellen Automatisierungssystems, die jeweils ein Kommunikationsmodul umfassen.

Speicherprogrammierbare Steuerungen umfassen typischerweise jeweils zusätzlich zu einem Kommunikationsmodul eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung und einer durch die speicherprogrammierbare Steuerung gesteuerten Maschine oder Vorrichtung 200. Die Zentraleinheit ist insbesondere für eine Ermittlung geeigneter Steuerungsgrößen aus erfassten Messgrößen vorgesehen. Obige Komponenten der speicherprogrammierbaren Steuerung sind vorzugsweise über ein Rückwandbus-System miteinander verbunden.

Eine Bedien- und Beobachtungsstation dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Bedien- und Beobachtungsstationen umfassen zusätzlich zu einem Kommunikationsmodul zumindest eine graphische Benutzerschnittstelle 121, ein Eingabegerät und eine Prozessoreinheit.

Zur Erfassung von Datenverkehr 120 zwischen einem ersten Kommunikationsendgerät 102a und einem zweiten Kommunikationsendgerät 102b stellt zumindest ein Netzinfrastrukturgerät 101, an das zumindest das erste 102a und zweite Kommunikationsendgerät 102b angeschlossen sind, eine gegen unautorisierten Zugriff gesicherte, den beiden Kommunikationsendgeräten 102a-b zugeordnete Überwachungsschnittstelle 110 bereit. Im vorliegenden Ausführungsbeispiel sind mehrere Netzinfrastrukturgeräte 101 vorgesehen, die jeweils eine Überwachungsschnittstelle 110 verfügbar machen.

Verfügbare Überwachungsschnittstellen 110 an Netzinfrastrukturgeräten 101 werden durch eine Geräteerfassungseinrichtung 103 ermittelt, die einen Legacy Device Discovery Service bereitstellt. Außerdem ermittelt die Geräteerfassungseinrichtung 103 den Überwachungsschnittstellen 110 zugeordnete Adressinformationen und stellt Informationen über die ermittelten Überwachungsschnittstellen 110 einschließlich den zugeordneten Adressinformationen als Schnittstelleninformationen an eine von oben genanntem Netzinfrastrukturgerät 101 separierte Aufzeichnungseinrichtung 104 bereit. Die Adressinformationen stellen Dienstzugangsinformationen dar und umfassen beispielsweise IP-Adressen und Angaben über einen Port, der einem Aufzeichnungsdienst, insbesondere einem durch die Aufzeichnungseinrichtung 104 bereitgestellten Legacy Device Capture Service, zugeordnet ist. Darüber hinaus konfiguriert die Aufzeichnungseinrichtung 104 Aufzeichnungsfunktionen an der den beiden Kommunikationsendgeräten 102a-b zugeordneten Überwachungsschnittstelle 110.

Entsprechend der Figur ist im vorliegenden Ausführungsbeispiel außerdem Zugriffsteuerungseinrichtung 105 vorgesehen, durch die ein Legacy Device Management Service implementiert wird. Durch die Zugriffsteuerungseinrichtung 105 werden Adressinformationen und Zugriffsrechte zur Nutzung von Überwachungsschnittstellen 110 an Netzinfrastrukturgeräten 101 verwaltet. Hierzu ist der Zugriffsteuerungseinrichtung 105 eine Datenbank 151 zugeordnet, in der entsprechende Zugriffsinformationen gespeichert sind bzw. werden. Grundsätzlich können solche Zugriffsinformationen aus einem Engineering-System eines industriellen Automatisierungssystems übernommen werden. Zur Einräumung der Zugriffsrechte können beispielsweise Passwörter, digitale Zertifikate bzw. digitale Schlüssel bereitgestellt werden.

Bei einer Anfrage eines Benutzers zur Erfassung des Datenverkehrs 120 zwischen dem ersten 102a und zweiten Kommunikationsendgerät 102b fragt die Aufzeichnungseinrichtung 105 von der Zugriffsteuerungseinrichtung 105 Zugriffsrechte des Benutzers zur Nutzung der den beiden Kommunikationsendgeräten 102a-b zugeordneten Überwachungsschnittstelle 110 ab. In Zusammenhang umfasst Benutzer begrifflich insbesondere Personen sowie physikalische bzw. logische Steuerungsgeräte. Anhand der durch die Geräteerfassungseinrichtung 103 bereitgestellten Schnittstelleninformationen sowie anhand der von der Zugriffsteuerungseinrichtung 105 abfragten Zugriffsrechte greift die Aufzeichnungseinrichtung 104 auf die den beiden Kommunikationsendgeräten 102a-b zugeordnete Überwachungsschnittstelle 110 zu und speichert dort erfassten Datenverkehr 120 zumindest temporär. Die Erfassung des Datenverkehrs 110 zwischen dem ersten und zweiten Kommunikationsendgerät 102a-b erfolgt insbesondere zur Analyse des Datenverkehrs 120 durch die die Aufzeichnungseinrichtung 104 oder durch eine separate, übergeordnete Auswertungseinrichtung 106. In letztgenanntem Fall stellt die Aufzeichnungseinrichtung 104 den erfassten Datenverkehr lediglich an die übergeordnete Auswertungseinrichtung 106 bereit, durch die dann die Analyse des erfassten Datenverkehrs erfolgt.

Vorzugsweise verbirgt die Aufzeichnungseinrichtung 104 Detailwissen, wie bei einem Netzinfrastrukturgerät 101 Mitschnittfunktionen angesprochen werden müssen. Insbesondere können Mitschnittfunktionen bei bestimmten Netzinfrastrukturgeräten nur vorübergehend angeschaltet wenn, wenn ein Mitschnitt angefertigt wird.

Durch eine übergeordnete Auswertungseinrichtung 106 kann beispielsweise ein Cluster Capture Service bereitgestellt werden, der auch Überwachungsfunktionen für Datenverkehr in virtualisierten Kommunikationsnetzen 107 umfasst. Auch für diesen Datenverkehr sind in Analogie zu obigen Ausführungen eine Erfassungseinrichtung 108 für virtualisierte Netzinfrastrukturgeräte, die einen Virtual Network Discovery Service bereitstellt, sowie eine entsprechende Aufzeichnungseinrichtung 109 zur Realisierung eines Virtual Network Capture Service vorgesehen. Somit können auch virtuelle Kommunikationsgeräteverschaltungen auf Docker Hosts und Kubernetes Knoten ermittelt und analysiert werden.

Entsprechend einer bevorzugten Ausführungsform verbindet sich die Aufzeichnungseinrichtung 104 zunächst mit einer Managementschnittstelle des jeweiligen Netzinfrastrukturgeräts 101, konfiguriert dann deren Mittschnittfunktionen als aktiv und verbindet sich danach mit einem ausgewählten TCP-Port des Netzinfrastrukturgeräts 101. Über diesen ausgewählten TCP-Port und einen entsprechend aufgebauten Websocket-Stream wird ein Mittschnitt an die Aufzeichnungseinrichtung 104 übertragen. Nach Beendigung des Mittschnitts und Abbau des Websocket-Streams beendet die Aufzeichnungseinrichtung 104 ihre Verbindung zum Netzinfrastrukturgerät 101 hinsichtlich der Überwachungsschnittstelle. Abschließend konfiguriert die Aufzeichnungseinrichtung 104 die Mittschnittfunktionen des Netzinfrastrukturgeräts 101 als inaktiv und beendet seine Verbindung mit der Managementschnittstelle des Netzinfrastrukturgeräts 101.

Beispielsweise kann Kommunikation zwischen der Aufzeichnungseinrichtung 104 und der übergeordneten Auswertungseinrichtung 106 über einen Secure Websocket-Datenstrom erfolgen, der mittels mTLS verschlüsselt und gesichert wird. Dies kann insbesondere mit Services Meshes, wie Istio (https://istio.io), realisiert werden. Zwischen der Aufzeichnungseinrichtung 104 und dem jeweiligen Netzinfrastrukturgerät 101 wird im vorliegenden Ausführungsbeispiel eine Geräte-spezifische Transportverbindung verwendet, die entsprechend TCP oder TLS aufgebaut wird. Wird die Aufzeichnungseinrichtung 104 in direkter topologischer Nähe des jeweiligen Netzinfrastrukturgeräts 101 platziert, insbesondere mit möglichst direkter Layer-2-Verbindung, kann eine Angreifbarkeit einer kurzen schwach, nur gesicherten Transportverbindung in Verbindung mit einem Zellschutz-Konzept minimiert werden.

## Patentansprüche

1. Verfahren zur Erfassung von Datenverkehr in einem Kommunikationsnetz, bei dem
- durch zumindest ein Netzinfrastrukturgerät (101), an das zumindest ein erstes (102a) und ein zweites Kommunikationsendgerät (102b) angeschlossen sind, eine gegen unautorisierten Zugriff gesicherte, den beiden Kommunikationsendgeräten zugeordnete Überwachungsschnittstelle (110) zur Erfassung von Datenverkehr (120) zwischen zumindest dem ersten und zweiten Kommunikationsgerät bereitgestellt wird, **dadurch gekennzeichnet, dass**
- durch eine Geräteerfassungseinrichtung (103) Schnittstelleninformationen, die verfügbare Überwachungsschnittstellen (110) an Netzinfrastrukturgeräten sowie Adressinformationen umfassen, die den Überwachungsschnittstellen zugeordnet sind, ermittelt werden,
- diese Schnittstelleninformationen durch die Geräteerfassungseinrichtung (103) an zumindest eine von dem zumindest einen Netzinfrastrukturgerät (101) separierte Aufzeichnungseinrichtung (104) bereitgestellt werden,
- die Aufzeichnungseinrichtung (104) bei einer Anfrage eines Benutzers zur Erfassung des Datenverkehrs zwischen dem ersten und zweiten Kommunikationsendgerät anhand der durch die Geräteerfassungseinrichtung (103) bereitgestellten Schnittstelleninformationen auf die den beiden Kommunikationsendgeräten zugeordnete Überwachungsschnittstelle (110) zugreift und dort erfassten Datenverkehr zumindest temporär speichert.

2. Verfahren nach Anspruch 1,
bei dem durch eine Zugriffsteuerungseinrichtung (105) Adressinformationen und Zugriffsrechte zur Nutzung von Überwachungsschnittstellen (110) an Netzinfrastrukturgeräten (101) verwaltet werden, bei dem die Aufzeichnungseinrichtung (104) bei der Anfrage des Benutzers zur Erfassung des Datenverkehrs zwischen dem ersten und zweiten Kommunikationsendgerät von der Zugriffsteuerungseinrichtung (105) Zugriffsrechte des Benutzers zur Nutzung der den beiden Kommunikationsendgeräten zugeordneten Überwachungsschnittstelle abfragt und bei dem die Aufzeichnungseinrichtung (104) anhand der durch die Geräteerfassungseinrichtung (103) bereitgestellten Schnittstelleninformationen sowie anhand der von der Zugriffsteuerungseinrichtung (105) abfragten Zugriffsrechte auf die den beiden Kommunikationsendgeräten zugeordnete Überwachungsschnittstelle (110) zugreift.

3. Verfahren nach Anspruch 2,
bei dem zur Einräumung der Zugriffsrechte Passwörter, digitale Zertifikate und/oder digitale Schlüssel bereitgestellt werden.

4. Verfahren nach einem der Ansprüche 1 bis 3,
bei dem die Adressinformationen IP-Adressen und/oder Dienstzugangsinformationen, insbesondere Angaben über einen Port, der einem Aufzeichnungsdienst zugeordnet ist, umfassen.

5. Verfahren nach einem der Ansprüche 1 bis 4,
bei dem durch die Aufzeichnungseinrichtung (104) Aufzeichnungsfunktionen an der den beiden Kommunikationsendgeräten zugeordneten Überwachungsschnittstelle (110) konfiguriert werden.

6. Verfahren nach einem der Ansprüche 1 bis 5,
bei dem die Erfassung des Datenverkehrs zwischen dem ersten und zweiten Kommunikationsendgerät zur Analyse des Datenverkehrs durch die die Aufzeichnungseinrichtung (104) oder durch eine von der zumindest einen Aufzeichnungseinrichtung separierte Auswertungseinrichtung (106) erfolgt.

7. Verfahren nach Anspruch 6,
bei dem die Analyse des erfassten Datenverkehrs zwischen dem ersten und zweiten Kommunikationsendgerät durch die Auswertungseinrichtung (106) erfolgt und bei dem die Aufzeichnungseinrichtung (104) den erfassten Datenverkehr an die Auswertungseinrichtung bereitstellt.

8. Verfahren nach Anspruch 7,
bei dem der erfasste Datenverkehr über eine verschlüsselte Verbindung zwischen der Aufzeichnungseinrichtung (104) und der Auswertungseinrichtung (106) bereitgestellt wird.

9. Verfahren nach einem der Ansprüche 7 oder 8,
bei dem Funktionen zur Analyse von Datenverkehr als Überwachungsdienst durch die Auswertungseinrichtung (106) bereitgestellt werden und bei dem Anfragen von Benutzern zur Analyse von Datenverkehr an die Auswertungseinrichtung als Dienstzugangspunkt gerichtet werden.

10. Verfahren nach einem der Ansprüche 1 bis 9,
bei dem die Aufzeichnungseinrichtung (104) über eine Sicherungsschicht-Übertragungsstrecke mit dem Netzinfrastrukturgerät (101) verbunden wird, dass die den beiden Kommunikationsendgeräten zugeordnete Überwachungsschnittstelle bereitstellt.

11. Verfahren nach einem der Ansprüche 1 bis 10,
bei dem Benutzer Personen, physikalische und/oder logische Steuerungsgeräte umfassen.

12. System zur Erfassung von Datenverkehr in einem Kommunikationsnetz, das zumindest ein Netzinfrastrukturgerät (101) umfasst, an das zumindest ein erstes (102a) und ein zweites Kommunikationsendgerät (102b) angeschlossen sind, wobei das System
- eine gegen unautorisierten Zugriff gesicherte, den beiden Kommunikationsendgeräten zugeordnete Überwachungsschnittstelle (110) zur Erfassung von Datenverkehr zwischen zumindest dem ersten und zweiten Kommunikationsgerät,
- eine Geräteerfassungseinrichtung (103) und
- zumindest eine von dem zumindest einen Netzinfrastrukturgerät (101) separierte Aufzeichnungseinrichtung (104) umfasst, **dadurch gekennzeichnet, dass**
- die Geräteerfassungseinrichtung (103) dazu ausgestaltet und eingerichtet ist, Schnittstelleninformationen, die verfügbare Überwachungsschnittstellen (110) an Netzinfrastrukturgeräten sowie Adressinformationen umfassen, die den Überwachungsschnittstellen zugeordnet sind, zu ermitteln und diese Schnittstelleninformationen an die Aufzeichnungseinrichtung (104) bereitzustellen,
- die Aufzeichnungseinrichtung (104) dazu ausgestaltet und eingerichtet ist, bei einer Anfrage eines Benutzers zur Erfassung des Datenverkehrs zwischen dem ersten und zweiten Kommunikationsendgerät anhand der durch die Geräteerfassungseinrichtung (103) bereitgestellten Schnittstelleninformationen auf die den beiden Kommunikationsendgeräten zugeordnete Überwachungsschnittstelle (110) zuzugreifen und dort erfassten Datenverkehr zumindest temporär zu speichern.

13. System nach Anspruch 12,
bei dem eine Zugriffsteuerungseinrichtung (105) vorgesehen ist, die dazu ausgestaltet und eingerichtet ist, Adressinformationen und Zugriffsrechte zur Nutzung von Überwachungsschnittstellen (110) an Netzinfrastrukturgeräten (101) zu verwalten, bei dem die Aufzeichnungseinrichtung (104) dazu ausgestaltet und eingerichtet ist, bei der Anfrage des Benutzers zur Erfassung des Datenverkehrs zwischen dem ersten und zweiten Kommunikationsendgerät von der Zugriffsteuerungseinrichtung (105) Zugriffsrechte des Benutzers zur Nutzung der den beiden Kommunikationsendgeräten zugeordneten Überwachungsschnittstelle abzufragen und bei dem die Aufzeichnungseinrichtung (104) dazu ausgestaltet und eingerichtet ist, anhand der durch die Geräteerfassungseinrichtung (103) bereitgestellten Schnittstelleninformationen sowie anhand der von der Zugriffsteuerungseinrichtung (105) abfragten Zugriffsrechte auf die den beiden Kommunikationsendgeräten zugeordnete Überwachungsschnittstelle (110) zuzugreifen.

## Claims

1. Method for detecting data traffic in a communication network, in which
- at least one network infrastructure device (101), to which at least a first (102a) and a second (102b) communication terminal are connected, is used to provide a monitoring interface (110) for detecting data traffic (120) between at least the first and second communication devices, said monitoring interface being associated with the two communication terminals and protected against unauthorized access, **characterized in that**
- a device detection apparatus (103) is used to ascertain interface information, which includes available monitoring interfaces (110) on network infrastructure devices and address information associated with the monitoring interfaces,
- the device detection apparatus (103) is used to provide this interface information to at least one logging apparatus (104) that is separate from the at least one network infrastructure device (101),
- the logging apparatus (104) responds to a request from a user to detect the data traffic between the first and second communication terminals by taking the interface information provided by way of the device detection apparatus (103) as a basis for accessing the monitoring interface (110) associated with the two communication terminals and at least temporarily storing data traffic detected there.

2. Method according to Claim 1,
in which an access control apparatus (105) is used to manage address information and access rights to use monitoring interfaces (110) on network infrastructure devices (101), in which the logging apparatus (104) responds to the request from the user to detect the data traffic between the first and second communication terminals by querying the access control apparatus (105) for access rights for the user to use the monitoring interface associated with the two communication terminals, and in which the logging apparatus (104) takes the interface information provided by way of the device detection apparatus (103) and the access rights requested from the access control apparatus (105) as a basis for accessing the monitoring interface (110) associated with the two communication terminals.

3. Method according to Claim 2,
in which the access rights are granted by providing passwords, digital certificates and/or digital keys.

4. Method according to one of Claims 1 to 3,
in which the address information includes IP addresses and/or service access information, in particular details about a port associated with a logging service.

5. Method according to one of Claims 1 to 4,
in which the logging apparatus (104) is used to configure logging functions on the monitoring interface (110) associated with the two communication terminals.

6. Method according to one of Claims 1 to 5,
in which the data traffic between the first and second communication terminals is detected to analyse the data traffic by way of the logging apparatus (104) or by way of an evaluation apparatus (106) that is separate from the at least one logging apparatus.

7. Method according to Claim 6,
in which the detected data traffic between the first and second communication terminals is analysed by way of the evaluation apparatus (106) and in which the logging apparatus (104) provides the detected data traffic to the evaluation apparatus.

8. Method according to Claim 7,
in which the detected data traffic is provided via an encrypted connection between the logging apparatus (104) and the evaluation apparatus (106).

9. Method according to either of Claims 7 and 8,
in which functions for analysing data traffic are provided as a monitoring service by way of the evaluation apparatus (106) and in which requests from users to analyse data traffic are sent to the evaluation apparatus as a service access point.

10. Method according to one of Claims 1 to 9,
in which the logging apparatus (104) is connected to the network infrastructure device (101) providing the monitoring interface associated with the two communication terminals via a data link layer transmission link.

11. Method according to one of Claims 1 to 10,
in which users include persons, physical and/or logical control devices.

12. System for detecting data traffic in a communication network comprising at least one network infrastructure device (101), to which at least a first (102a) and a second (102b) communication terminal are connected, the system comprising
- a monitoring interface (110) for detecting data traffic between at least the first and second communication devices, said monitoring interface being associated with the two communication terminals and protected against unauthorized access,
- a device detection apparatus (103) and
- at least one logging apparatus (104) that is separate from the at least one network infrastructure device (101), **characterized in that**
- the device detection apparatus (103) is arranged and configured to ascertain interface information, which includes available monitoring interfaces (110) on network infrastructure devices and address information associated with the monitoring interfaces, and to provide this interface information to the logging apparatus (104),
- the logging apparatus (104) is arranged and configured to respond to a request from a user to detect the data traffic between the first and second communication terminals by taking the interface information provided by way of the device detection apparatus (103) as a basis for accessing the monitoring interface (110) associated with the two communication terminals and at least temporarily storing data traffic detected there.

13. System according to Claim 12,
in which there is provision for an access control apparatus (105), which is arranged and configured to manage address information and access rights to use monitoring interfaces (110) on network infrastructure devices (101), in which the logging apparatus (104) is arranged and configured to respond to the request from the user to detect the data traffic between the first and second communication terminals by querying the access control apparatus (105) for access rights for the user to use the monitoring interface associated with the two communication terminals, and in which the logging apparatus (104) is arranged and configured to take the interface information provided by way of the device detection apparatus (103) and the access rights requested from the access control apparatus (105) as a basis for accessing the monitoring interface (110) associated with the two communication terminals.

## Revendications

1. Procédé de détection d'un trafic de données dans un réseau de communication, dans lequel
- par au moins un appareil (101) d'infrastructure de réseau, auquel au moins un premier (102a) et un deuxième terminal (102b) de communication sont raccordés, on dispose, pour la détection d'un trafic (120) de données entre au moins le premier et le deuxième appareil de communication, d'une interface (110) de contrôle sécurisée à l'encontre d'un accès non autorisé et associée aux deux terminaux de communication, **caractérisé en ce que**
- par un dispositif (103) de détection d'appareil, on détermine des informations d'interface, qui comprennent des interfaces (110) de contrôle disponibles sur les appareils d'infrastructure de réseau ainsi que des informations d'adresse, qui sont associées aux interfaces de contrôle,
- on met ces informations d'interface à disposition, par le dispositif (103) de détection d'appareils, d'un dispositif (104) d'enregistrement distinct du au moins un appareil (101) d'infrastructure de réseau.
- le dispositif (104) d'enregistrement accède, sur une demande d'un utilisateur de détection du trafic de données entre le premier et le deuxième terminal de communication, à l'aide des informations d'interface mises à disposition par le dispositif (103) de détection d'appareil, à l'interface (110) de contrôle associée aux deux terminaux de communication et met en mémoire au moins temporairement, le trafic de données, qui y est détecté.

2. Procédé suivant la revendication 1,
dans lequel, par un dispositif (105) de commande d'accès, on gère des informations d'adresse et des droits d'accès pour l'utilisation d'interfaces (110) de contrôle sur des appareils (101) d'infrastructure de réseau, dans lequel le dispositif (104) d'enregistrement demande, sur demande de l'utilisateur de détection du trafic de données entre le premier et le deuxième terminal de communication, des droits d'accès, par le dispositif (105) de commande d'accès, de l'utilisateur à l'utilisation de l'interface de contrôle associée aux deux terminaux de communication et dans lequel le dispositif (104) d'enregistrement accède, à l'aide des informations d'interface mises à disposition par le dispositif (103) de détection d'appareil ainsi qu'à l'aide des droits d'accès demandés au dispositif (105) de commande d'accès, à l'interface (110) de contrôle associée aux deux terminaux de communication.

3. Procédé suivant la revendication 2,
dans lequel, pour l'octroi des droits d'accès, on met à disposition des mots de passe, des certificats numériques et/ou des clés numériques.

4. Procédé suivant l'une des revendications 1 à 3,
dans lequel des informations d'adresse comprennent des adresses IP et/ou des informations d'accès à un service, en particulier des indications sur un accès, qui est associé à un service d'enregistrement.

5. Procédé suivant l'une des revendications 1 à 4,
dans lequel, par le dispositif (104) d'enregistrement, on configure des fonctions d'enregistrement sur l'interface (110) de contrôle associée aux deux terminaux de communication.

6. Procédé suivant l'une des revendications 1 à 5,
dans lequel la détection du trafic de données entre le premier et le deuxième terminal de communication s'effectue pour l'analyse du trafic de données par le dispositif (104) d'enregistrement ou par un dispositif (106) d'évaluation distinct du au moins un dispositif d'enregistrement.

7. Procédé suivant la revendication 6,
dans lequel l'analyse du trafic de données détectée entre le premier et le deuxième terminal de communication s'effectue par le dispositif (106) d'évaluation et dans lequel le dispositif (104) d'enregistrement met à disposition du dispositif d'évaluation le trafic de données détecté.

8. Procédé suivant la revendication 7,
dans lequel on donne le trafic de données détecté par une liaison chiffrée entre le dispositif (104) d'enregistrement et le dispositif (106) d'évaluation.

9. Procédé suivant l'une des revendications 7 ou 8,
dans lequel on met à disposition, par le dispositif (106) d'évaluation, des fonctions d'analyse du trafic de données comme service de contrôle et dans lequel on dirige des demandes d'utilisateurs d'analyse du trafic de données au dispositif d'évaluation comme point d'accès aux services.

10. Procédé suivant l'une des revendications 1 à 9,
dans lequel on met le dispositif (104) d'enregistrement par une section de transfert à couche de sécurité en communication avec l'appareil (101) d'infrastructure de réseau, qui donne l'interface de contrôle associée aux deux terminaux de communication.

11. Procédé suivant l'une des revendications 1 à 10,
dans lequel des utilisateurs comprennent des personnes, des appareils de commande physiques et/ou logiques.

12. Système de détection d'un trafic de données dans un réseau de communication, qui comprend au moins un appareil (101) d'infrastructure de réseau, auquel sont raccordés le au moins un premier (102a) et un deuxième terminal (102b) de communication, dans lequel le système comprend
- une interface (110) de contrôle, sécurisée vis-à-vis d'un accès non autorisé et associée aux deux terminaux de communication, pour la détection du trafic de données entre au moins le premier et le deuxième appareil de communication,
- un dispositif (103) de détection d'appareil et
- au moins un dispositif (104) d'enregistrement distinct du au moins un appareil (101) d'infrastructure de réseau, **caractérisé en ce que**
- le dispositif (103) de détection d'appareil est conformé et agencé pour déterminer des informations d'interface, qui comprennent des informations (110) de contrôle disponibles sur les appareils d'infrastructure de réseau ainsi que des informations d'adresse, qui sont associées aux interfaces de contrôle, et pour mettre ces informations d'interface à disposition du dispositif (104) d'enregistrement,
- le dispositif (104) d'enregistrement est confirmé et agencé pour accéder, sur une demande d'un utilisateur de détection du trafic de données entre le premier et le deuxième terminal de communication, à l'aide des informations d'interface mises à disposition par le dispositif (103) de détection d'appareil, à l'interface (110) de contrôle associée aux deux terminaux de communication et mettre en mémoire au moins temporairement le trafic de données, qui y est détecté.

13. Système suivant la revendication 12,
dans lequel, par un dispositif (105) de commande d'accès, on gère des informations d'adresse et des droits d'accès pour l'utilisation d'interfaces (110) de contrôle sur des appareils (101) d'infrastructure de réseau, dans lequel le dispositif (104) d'enregistrement demande, sur demande de l'utilisateur de détection du trafic de données entre le premier et le deuxième terminal de communication, par le dispositif (105) de commande d'accès, des droits d'accès de l'utilisateur à l'utilisation de l'interface de contrôle associée aux deux terminaux de communication et dans lequel le dispositif (104) d'enregistrement est conformé et agencé pour accéder, à l'aide des informations d'interface mises à disposition par le dispositif (103) de détection d'appareil ainsi qu'à l'aide des droits d'accès demandés au dispositif (105) de commande d'accès, à l'interface (110) de contrôle associée aux deux terminaux de communication.
